# EUROPÄISCHE PATENTSCHRIFT

(11) **EP 1 674 544 B1**
(45) Veröffentlichungstag und Bekanntmachung des Hinweises auf die Patenterteilung: **21.02.2007**
(21) Anmeldenummer: 05111833.9
(22) Anmeldetag: 08.12.2005
(51) Int. Cl.: C09J 7/02, B32B 7/12

(54) **Klebeband insbesondere zur Abdeckung von Fensterflanschen**
Adhesive tape for masking window flanges
Ruban-cache autocollant pour collerette de fenêtre

(30) Priorität: 23.12.2004 DE 102004063330
(43) Veröffentlichungstag der Anmeldung: 28.06.2006
(73) Patentinhaber: tesa AG, 20253 Hamburg (DE)
(72) Erfinder: Böhm, Nicolai, Dr., 20357 Hamburg (DE); Krupke, Siegfried, 25463 Tornesch (DE)
(74) Vertreter: Stubbe, Andreas

(56) Entgegenhaltungen:
- EP-A- 1 095 994

## Beschreibung

Die Erfindung betrifft ein Klebeband insbesondere zur Abdeckung von Fensterflanschen insbesondere in Automobilrohkarosserien, die mit kathodischem Tauchlack (KTL) beschichtet sind. Das Klebeband soll die Fensterflansche bei den nachfolgenden Lackier- und Einbrennprozessen vor dem Überlackieren derartig schützen, dass nach dem Abziehen des Klebebandes auf den füller- und klarlackfreien Fensterflansch eine Automobilglasscheibe mit einem reaktiven PU-Scheibenkleber eingeklebt werden kann.

Automobilglasscheiben werden herkömmlich mit Gummidichtungen in der fertig lackierten Fahrzeugkarosserie fixiert. Dieses Verfahren wurde in den letzten Jahren zunehmend durch das Einkleben der Scheiben mit Reaktivklebstoffen (zum Beispiel auf Polyurethanbasis) ersetzt. Dabei wird die Scheibe mit dem Kleber bestrichen und so auf die Karosserie aufgesetzt, dass die Kleberaupe auf den Fensterflansch aufgedrückt wird.

Die eingeklebten Scheiben, insbesondere die Windschutzscheiben, dienen heute als versteifendes Element der Karosserie. Im Extremfall vermeiden sie bei einem Überschlag des Fahrzeugs das Einknicken der Dachsäulen. Daher ist eine ausreichende Verklebungsfestigkeit für die Unfallsicherheit eines modernen Kraftfahrzeugs maßgeblich.

Moderne Autolacke bestehen aus diversen Schichten, die auf das geprimerte Karosseriemetall in folgender Reihenfolge aufgebracht werden (schematisiert):
- elektrophoretischer Tauchlack, meist kathodischer Tauchlack (KTL)
- Füller- oder Funktionsschicht
- Farbgebender Decklack
- Klarlack

Die elektrophoretische Lackierung (Elektrotauchlackierung) stellt ein Tauchverfahren dar, bei dem die Beschichtung durch Einwirkung eines elektrischen Feldes (50 bis 400 V) erfolgt. Der zu lackierende, den elektrischen Strom leitende Körper wird als Anode oder Kathode in das Farbbad eingebracht, in der Praxis fungiert die Beckenwand als zweite Elektrode.
Die abgeschiedene Lackmenge ist der zugeführten Strommenge direkt proportional. Die elektrophoretische Lackierung wird besonders zur Grundierung, zum Beispiel in der Automobilindustrie eingesetzt. Es treten keine Spritzverluste auf, und die erhaltenen Beschichtungen sind auch an schwer zugänglichen Stellen sehr gleichmäßig. Bei nichtleitenden Unterlagen, zum Beispiel Kunststoffen, Glas, Keramik usw. bedient man sich zur Beschichtung der elektrostatischen Aufladung der Lackteilchen (so genannte elektrostatische Lackierung).

Wird die Automobilscheibe nach abgeschlossenem Lackiervorgang auf den mitlackierten Fensterflansch geklebt, sind folgende Nachteile gegeben.
Da der Scheibenkleber auf den Klarlack als Haftgrund abgestimmt sein muss, kann sich bei der Vielzahl der bei einem Hersteller verwendeten Klarlacke eine unnötig hohe Komplexität ergeben, weil eine Vielzahl von passenden Klebern bereit gehalten werden muss. Wichtiger ist jedoch die Tatsache, dass die Gesamtverklebungsfestigkeit der Automobilscheibe von der schwächsten Stelle im vielschichtigen Lackaufbau abhängt und damit weit geringer sein kann als die Verklebungsfestigkeit des Klebers auf dem Klarlack.

Es ist daher vorteilhaft, die Scheibe auf die unterste Lackschicht, die KTL-Schicht, aufzubringen. Die Zahl der verwendeten KTL-Präparate bei einem Hersteller ist üblicherweise geringer als die der Klarlacke. Zum einen liegen damit wenige definierte Haftgründe für den Scheibenkleber vor, und zum anderen birgt der Aufbau geprimertes Metall/KTL/Scheibenkleber mit zwei Grenzschichten eine geringere Gefahr des Bruches als ein komplexer Gesamtlackaufbau.

Zum Abdecken des Fensterflansches nach der Aufbringung des KTL lässt sich ein PVC-Plastisol verwenden, wie es in der EP 0 655 989 B1 beschrieben ist. Dieses wird in flüssiger Form auf den Fensterflansch aufgebracht, überlackiert und geliert während der Einbrennphase bei Temperaturen von mindestens 163 °C zu einem festen Film aus. Nachteilig an diesem Verfahren ist, dass für das Demaskieren nach erfolgtem Einbrennen ein _{"}Anfasser" mechanisch freigelegt werden muss, bei dem leicht auch der KTL verletzt werden kann, was die Gefahr nachfolgender Korrosion birgt.
Der Plastisolstreifen kreuzt an den Fensterflanschen zum Teil mehrfach PVC-Nahtabdichtungen, die Schweißnähte auffüllen. Beim Ausgelieren werden häufig starke Verklebungen zwischen Nahtabdichtungen und PVC-Plastisol Fensterflanschabdeckung beobachtet, die eine problemlose Demaskierung erschweren. Ebenfalls zu beobachten sind plastisolbedingte Kontaminationen des Haftgrundes derart, dass sich ein Adhäsionsversagen an der Grenze zwischen Scheibenkleber und ehemals plastisolmaskiertem KTL zeigt.
Die geforderte Verklebungssicherheit der Scheibe ist so nicht gewährleistet.
Diesem kann zwar durch Einsatz eines Primers entgegengewirkt werden, doch ist dieser Schritt arbeitsintensiv, führt zu unerwünschten Lösungsmittelemissionen und kann durch versehentliches Verspritzen oder Tropfen auf dem Klarlack Lackreparaturen nötig machen.

Eine vorteilhaftere Möglichkeit der Maskierung von Fensterflanschen ist die Verwendung von Selbstklebebändern. Deren Vorteil gegenüber dem Plastisol ist die deutlich geringere Schichtdicke von 100 bis 200 µm, die entsprechend weniger Abfallgewicht pro maskiertem Fahrzeug ergibt. Der gleichzeitige Nachteil ist jedoch die Gefahr des Reißens des vergleichsweise dünnen Selbstklebebandträgers beim Demaskieren nach der Anwendung. Diese entsteht zum einen dadurch, dass das Selbstklebeband beim Demaskieren mehrere Lackschichten durchtrennen muss und dabei von der Kante her stets von mikroskopisch kleinen Zacken des spröden Klarlackes verletzt wird, von denen sich ein Trägerabriss entwickeln kann. Zum anderen befindet sich auf der Rückseite des Selbstklebebandes ein spröder, mehrschichtiger Lackaufbau von ca. 100 µm Dicke, der dem Träger jegliche Elastizität nimmt und daher bei Kraftspitzen sehr leicht zum Abreißen desselben führt.
Wegen der Randbedingung, dass sich ein Selbstklebeband für diese Anwendung auch automatisiert per Roboter verarbeiten lassen muss, bei der der Träger mit größeren Zugbelastungen beaufschlagt wird als bei der Verarbeitung von Hand, hat sich ein zweischichtiger Aufbau für den Träger eines Selbstklebebandes für die Maskierung von Fensterflanschen bewährt.
So ist seit vielen Jahren ein Spezialklebeband für diese Anwendung erhältlich, dessen Träger aus einem zweischichtigen Verbund einer Weich-Polyvinylchlorid (sPVC)- und einer Polyethylenterephthalat (PET)-Folie besteht. In diesem Fall wird der Verbund der beiden Folien durch eine Naturkautschukselbstklebemasse hergestellt.
Die PET-Folie sorgt dabei für eine hohe Zugfestigkeit, die dem Lack zugewandte sPVC-Seite bietet dem Verbund die notwendige Zähigkeit und Resistenz gegen die mikrogezackte Aufrisskante des Lackes.

Ein Laminat ist grundsätzlich ein tauglicher Lösungsansatz für den Einsatzzweck der Fensterflanschmaskierung. Der Hauptnachteil der oben beschriebenen Ausführungsform liegt aber in der Verwendung der Naturkautschukselbstklebemasse als Kaschierkleber. Bei der Demaskierung neigt das Laminat mit diesem Kaschierkleber zum vollflächigen oder zumindest partiellen Spleißen, in der Regel verbunden mit nachfolgendem Reißen, offenbar als Folge der thermischen Belastung, der das Selbstklebeband beim Trocknen der Lackschichten ausgesetzt ist. Insbesondere das partielle Spleißen stellt ein Sicherheitsrisiko dar, weil sich der PET-Film, der auf dem Fensterflansch verbleibt, farblich nur wenig vom KTL abhebt und daher leicht übersehen werden kann. Diese PET-Reste sind ein gänzlich ungeeignetes Haftmedium für Scheibenkleber und verhindern an den betroffenen Stellen die sichere Verklebung der Scheibe.

Eine Verbesserung dieses Mangels wird in der DE 199 52 211 A1 vorgeschlagen. Statt eines Kaschierklebers aus einer Naturkautschukselbstklebemasse wird einer auf Acrylsäureesterpolymerisatbasis offenbart. Wie im Beispiel 1 dieser Schrift ausgeführt, gilt dieses insbesondere für solche Polymerisate, die mit Klebharzen abgemischt sind. Als Prüfbedingung für den Nachweis der Beständigkeit wird das Selbstklebeband einer thermischen Belastung von 40 Minuten bei 170 °C unterworfen, gefolgt von 30 Minuten bei 130 °C. Unter dieser Belastung funktioniert der vorgeschlagene Produktaufbau in der Tat gut.
In der Praxis jedoch zeigt sich, dass ein solcher Produktaufbau doch nicht die erwartete Verbesserung bringt. Es treten Delaminationen als Folge einer kohäsiven Schwächung des Kaschierklebers auf.
Der Hauptgrund ist, dass die Prozessbedingungen bei der Lacktrocknung nicht nur von Kraftfahrzeughersteller zu Kraftfahrzeughersteller, sondern mitunter sogar von Werk zu Werk variieren. So wird das Klebeband beispielsweise mal vor und mal nach dem Einbrand des Nahtabdichters durchgeführt, im ersten Fall also mit einem weiteren Temperaturzyklus neben Füller- und Klarlackeinbrand belastet. In den Werken, in denen die Auffälligkeiten auftreten, herrschen stets härtere Einbrennbedingungen als in den weniger oder gar nicht auffälligen. Insbesondere ist zu beachten, dass Trockenöfen im Rahmen von Prozessfenstern betrieben werden, das heißt, es werden im Hinblick auf Verweilzeit und Temperatur Ober- und Untergrenzen definiert, denen die Karosserie ausgesetzt sein kann.
Die Versagensquote liegt bei Rohkarosserien, die am oberen Rand des Prozessfensters getrocknet werden, deutlich über denen, die am unteren Rand getrocknet werden. Eine ungewöhnlich harte, aber in der Praxis vorkommende Prozessobergrenze, die das Band schadlos überstehen muss, ist beispielsweise eine thermische Belastung von 50 Minuten bei 170 °C, gefolgt von 50 Minuten bei 165 °C, nochmals gefolgt von 80 Minuten bei 145 °C. Es ist offensichtlich, dass diese Bedingungen erheblich härter sind als die in DE 199 52 211 A1 geprüften, die somit anspruchsvollere Praxisfälle nicht abdecken.

Die Kohäsionsschwäche eines Laminates gemäß Beispiel 1 aus DE 199 52 211 A1 ist vermutlich die Folge eines thermisch bedingten Molekulargewichtsabbaues des Acrylsäureesterpolymerisates, der durch Harz, das als niedermolekularer Stoff die Kohäsion stets schwächt, noch begünstigt worden sein kann.
Selbst Acrylsäureesterpolymerisate, die frei von Klebharzen sind, zeigen nicht generell gute Eignung unter den härteren thermischen Belastungen wie 50 Minuten bei 170 °C, gefolgt von 50 Minuten bei 165 °C, nochmals gefolgt von 80 Minuten bei 145 °C. Sie zeigen analoge kohäsive Schwächen, wenn auch nicht in dem Maß wie klebharzhaltige Acrylsäureesterpolymerisate.

Die Erfindung löst das Problem, ein Selbstklebeband insbesondere zur Fensterflanschabdeckung mit einem Trägermaterial zur Verfügung zu stellen, das die Nachteile des Standes der Technik nicht oder nicht in dem Maße zeigt. Insbesondere soll sich das Selbstklebeband auch nach den härteren in der Praxis vorkommenden Einbrennbedingungen ohne Delamination, das heißt Trennung der beiden das Laminat konstituierenden Folien (PET- und sPVC-Folie), abziehen lassen, so dass nach dem Abziehen des Selbstklebebandes eine Automobilglasscheibe mit einem reaktiven PU-Scheibenkleber auf dem KTL-Haftgrund des Fensterflansches eingeklebt werden kann.

Gelöst wird diese Aufgabe durch ein Selbstklebeband, wie es im Hauptanspruch niedergelegt ist. Gegenstand der Unteransprüche sind dabei vorteilhafte Weiterbildungen des Selbstklebebands.

Demgemäß betrifft die Erfindung ein Selbstklebeband insbesondere zum Abdecken von Fensterflanschen von Automobilen umfassend einen Träger aus zwei übereinander angeordneten Folien, wobei die erste Folie aus weichgemachtem Polyvinylchlorid (sPVC), die zweite aus Polyethylenterephthalat (PET) besteht und die beiden Folien mit einem Kaschierkleber verbunden sind aus einem vernetzten, klebharzfreien Acrylsäureesterpolymerisat, gekennzeichnet durch einen Mikroscherweg von weniger als 60 µm (bei einem Flächengewicht von 25 g/m²) und einer Delaminationskraft von mehr als 3 N/cm, sowie einer auf dem Träger aufgebrachten Selbstklebemasse.
Die Selbstklebemasse kann dabei auf der ersten oder der zweiten Folie aufgebracht sein.

Die Gesamtdicke des zweischichtigen Trägers beträgt in einer ersten vorteilhaften Ausführungsform 90 bis 300 µm, bevorzugt 130 bis 250 µm.

Weiter vorteilhaft kann auf der klebemassefreien Rückseite des Trägermaterials ein Trennlack zur leichten Abrollbarkeit vorhanden sein, nämlich dann, wenn die Masse gut auf der Rückseite haftet. Der Trennlack empfiehlt sich insbesondere, wenn das Material ohne Trennmedium wie Trennpapier oder Trennfolie zur Rolle gewickelt werden soll. Gleichzeitig sollte er eine sichere Füller- und Lackhaftung gewährleisten.

Das Flächengewicht des Kaschierklebers aus dem erfindungsgemäßen vernetzten, klebharzfreien Acrylsäureesterpolymerisat liegt in einer weiteren vorteilhaften Ausführungsform der Erfindung zwischen 5 bis 60 g/m², bevorzugt 10 bis 40 g/m².

Der erfindungsgemäße Kaschierkleber aus Acrylsäureesterpolymerisat ist ein Copolymer aus verschiedenen Acrylsäureesterpolymeren aus Acrylsäureestern wie zum Beispiel n-Butylacrylat, t-Butylacrylat, n-Butylmethacrylat, t-Butylmethacrylat, 2-Ethylhexylacrylat, Methylacrylat, Ethylacrylat, Methylmethacrylat, Hydroxyethylmethacrylat Hydroxyethylacrylat, Hydroxypropylacrylat, Stearylacrylat, Isobornylacrylat, Glycidylmethacrylat, aber auch gegebenenfalls aus Acrylsäure oder aus Nicht-Acrylatmonomeren wie Vinylacetat oder ein Gemisch verschiedener Homo- oder Copolymere aus Acrylsäureestermonomeren, das mit geeigneten Verfahren vernetzt ist. Dieser Kaschierkleber wird nicht mit Klebharzen abgemischt.

In einer bevorzugten Ausführungsform der Erfindung enthält das Acrylsäureesterpolymerisat mindestens 20 Mol-% der Monomere n-Butylacrylat oder 2-Ethylhexylacrylat.

Es ist Stand der Technik, Selbstklebemassen auf Basis von Acrylsäureestern zu vernetzen, um deren klebtechnische Eigenschaften, insbesondere die Scherfestigkeit zu verbessern. Der Vernetzungsgrad beeinflusst zugleich auch die Schälfestigkeit, ein Maß für das Adhäsionsvermögen einer Selbstklebemasse auf einem spezifischen Haftgrund. Dabei gilt folgende Faustregel: je stärker eine Selbstklebemasse mit ansonsten identischer Rezeptur vernetzt ist, desto geringer ist ihre Schälkraft. Eine hohe Schälkraft sowohl von der PET- als auch von der sPVC-Folie ist neben einer hohen Kohäsion aber zwingende Voraussetzung für einen ausreichenden Verbund der beiden Materialien.

Aus Gründen der notwendigen Kohäsion muss, wie schon ausgeführt, auf Klebharze verzichtet werden. Klebharze haben aber gerade den Sinn, die Schälkräfte einer Selbstklebemasse zu erhöhen. Zur Kompensation der fehlenden Harze müsste die Selbstklebemasse also unvernetzt oder nur sehr leicht vernetzt sein. Es ist also nahe liegend, die harzfreie Selbstklebemasse nur so schwach zu vernetzen, dass sie den Kompromiss bildet zwischen gerade ausreichender Kohäsion und möglichst hoher Adhäsion zu den Fügepartnern PET und sPVC.

Entgegen dieser Erwartung vermögen insbesondere stark vernetzte Acrylsäureesterpolymerisate die bestehende Problematik zu lösen, einen stabilen Verbund zu erzeugen.

Ein Maß für den Vernetzungsgrad einer Selbstklebemasse ist die Messung des Mikroscherweges. Dabei wird die Selbstklebemasse einseitig auf einen dimensionsstabilen Träger definierter Breite aufgebracht und mit der freien klebenden Seite auf einen Prüfhaftgrund aus Stahl aufgeklebt, der eine konstante Temperatur, oberhalb Raumtemperatur aufweist. An einer vorbereiteten Schlaufe des dimensionsstabilen Trägers unterhalb der Verklebung wird ein definiertes Gewicht angehängt und die Auslenkung des Prüfkörpers über eine gewisse Zeit mit einem Messfühler erfasst und aufgezeichnet. Die Methode ist nur dann definiert, wenn ein adhäsives Versagen sowohl zwischen dimensionsstabilem Träger und Selbstklebemasse als auch zwischen Prüfhaftgrund und Selbstklebemasse ausgeschlossen werden kann, das heißt, der Mikroscherweg ausschließlich die viskoelastischen Eigenschaften der Selbstklebemasse widerspiegelt.

Zum quantitativen Vergleich von Selbstklebemassemustern muss sichergestellt sein, dass das Flächengewicht der Selbstklebemasse identisch ist, da der Mikroscherweg dazu proportional ist.
Der Mikroscherweg ist null bei vollkommen unelastischen Stoffen (kommt bei Selbstklebemassen nicht vor) und kann den Maximalwert erreichen (hier 1000 µm), wenn die Selbstklebemasse sehr schwach oder gar nicht vernetzt ist.
Das Verfahren und dessen Durchführung werden in den Beispielen anhand von Abbildungen näher erläutert.

Die Verbundfestigkeit lässt sich beschreiben durch die Kraft, die notwendig ist, das Laminat auseinander zu ziehen, und soll im folgenden _{"}Delaminationskraft" genannt werden. Das Laminat wird dazu mit der PET-Seite nach unten auf eine Hilfsschiene geklebt, die in eine Zugprüfmaschine eingespannt wird. An einem freien, vom PET gelösten Ende wird die sPVC-Folie im 180°-Winkel mit einer definierten Geschwindigkeit vom PET abgeschält. Es hat sich empirisch in der Praxis gezeigt, dass eine Delaminationskraft von 3 N/cm mindestens erreicht werden muss, wenn man verhindern will, dass sich das Laminat schon beim Abwickeln, beim Aufnehmen eines "Anfassers" zum Demaskieren oder beim Demaskieren trennt. Noch prozesssicherer ist eine Delaminationskraft von mehr als 5 N/cm.

So wurde gefunden, dass bei einem Mikroscherweg von weniger als 60 µm bei einem Flächengewicht des Kaschierklebers von 25 g/m² die notwendige Delaminationskraft von mehr als 3 N/cm, bevorzugt mehr als 5 N/cm erreicht wird, nachdem das Band über 50 Minuten bei 170 °C, gefolgt von 50 Minuten bei 165 °C, gefolgt von 80 Minuten bei 145 °C thermisch belastet wurde.

Die Herstellung von Acrylsäureesterpolymerisaten erfolgt üblicherweise in Reaktoren, in denen ein geeignetes Lösungsmittel vorgelegt wird und die in der Regel flüssigen Monomere gesamthaft oder zunächst teilweise hinzugegeben werden. Die Polymerisation erfolgt durch Zugabe von Radikalstartern (zum Beispiel Dibenzoylperoxid oder Azobisisobutyronitril). Die freiwerdende Reaktionswärme wird durch Rückflusskühlung des Lösemittels abgeführt.
Am Ende der Polymerisation erhält man ein gelöstes Copolymer, das in erster Nährung die Comonomere in statistischer Verteilung enthält. Diese Lösung wird vor der Verarbeitung, das heißt dem Aufstreichen auf den bahnförmigen Träger, meistens noch mit Lösemitteln auf eine gute Streichviskosität verdünnt.
Die Vernetzung findet erst nach dem Verstreichen der Lösung statt, da ein vernetztes Polymer nicht mehr oder nur eingeschränkt fließfähig ist. Dazu kann das Vernetzungsagens entweder der Streichlösung zugesetzt werden oder die Vernetzung kann nachträglich erzielt werden.
Bekannte Vernetzungsverfahren sind die Zugabe von den oben genannten Radikalstartern direkt vor dem Verstreichen. Diese erzeugen statistisch Radikale in den Hauptketten der Polymere, die zum Teil unter Rekombination Vernetzungspunkte bilden. Sofern reaktive Gruppen wie Acrylsäure- oder Hydroxyfunktionen vorhanden sind kann mit mehrfunktionellen Isocyanaten vernetzt werden, zum Beispiel 4,4'-Diphenylmethandüsocyanat (MDI), Hexamethylendüsocyanat (HDI), Toluoldüsocyanat (TDI) oder Isophorondüsocyanat (IPDI).
Auch mehrfunktionelle Epoxidvernetzer wie Polyglycidylamin sind geeignete Vernetzungsreagenzien.
Sehr verbreitet ist die Vernetzung mit Metallchelaten, zum Beispiel Aluminiumacetylacetonat oder Alkoholaten wie Titanalkoholaten (zum Beispiel Titantetrabutanolat). Diese setzen stets Acrylsäure als Comonomer voraus, die mit den mehrwertigen Metallionen Carboxylate bildet.
Ebenfalls möglich ist die Vernetzung mit Glycidylmethycrylat als Comonomer des Acrylsäureesterpolymerisats, einer eingebauten Epoxidfunktion, die sich insbesondere in Anwesenheit eines Katalysators mit Hydroxyfunktionen oder Acrylsäure unter Netzwerkbildung umsetzt.
Eine Vernetzungsmethode, die ohne Vernetzungschemikalien auskommt, ist die Behandlung mit Elektronenstrahlen, die ähnlich den Radikalbildnern statistisch Radikale entlang der Polymerhauptketten erzeugt, die unter Netzwerkbildung zum Teil rekombinieren. Verbessert werden kann die Wirksamkeit noch durch Zugabe von Promotoren, in der Regel mehrfunktionelle Acrylate.
Die genannten Vernetzungsmechanismen können auch kombiniert werden.

Unter den erfindungsgemäßen Gedanken fallen auch Systeme, häufig so genannte Präpolymere, die lösemittelfrei als Hot- oder Warmmelt aufgetragen werden können und durch UV-Strahlung vernetzt werden. Diese sind teilweise über die UV-Dosis individuell im Vernetzungsgrad variabel.

Als Weich-PVC-Folien eignen sich prinzipiell alle mittels Kalander-, Extruder- oder Gießverfahren hergestellte innerlich oder äußerlich weichgemachte PVC-Folien. Bei äußerer Weichmachung sind Polymerweichmacher bevorzugt, da Monomerweichmacher, etwa Phthalate, aliphatische Dicarbonsäureester wie Sebazate, Phosphorsäureester oder Sulfonsäureester bei den hohen Temperaturen bereits flüchtig sind. Geeignete Polymerweichmacher sind zum Beispiel Polyadipate, Polysebazate, Polyphthalate, Trimellitate. Um die Zähigkeit des Weich-PVC weiter zu steigern, kann auch zusätzlich mit Polyethylenvinylacetat, Nitrilkautschuk, Butadien-Acrylnitril-Styrolcopolymeren oder chlorierten Polyolefinen verschnitten werden.
Aufgrund der starken thermischen Belastung über die vielfachen Temperaturzyklen kommt der thermischen und oxidativen Stabilisierung über den Folienherstellprozess hinaus eine besondere Bedeutung zu. Eine stoffliche Einschränkung gibt es hierbei nicht, so dass prinzipiell alle marktüblichen Stabilisatoren auf Basis von Blei, Barium, Barium/Zink, Calcium/Zink, Zinn oder organische Stabilisatoren wie Aminocrotonate, insbesondere zusammen mit wirksamen Kostabilisatoren in ausreichender Dosierung verwendet werden können.

Füllstoffe können zur dimensionalen Stabilisierung der Weich-PVC-Folie bei den thermischen Beanspruchungen, aber auch aus ökonomischen Gründen zugesetzt werden. Dazu empfehlen sich beispielsweise Calciumcarbonate wie Kreide, Kaolin, Ruß, Silicate wie Aerosil, Aluminiumhydroxid, Talkum, Dolomit, Titandioxid oder Silica.
Zur besseren Verarbeitung können äußere Gleitmittel, etwa Amidwachse, Stearinsäure, Stearate, Oleate oder synthetische Wachse, hilfreich sein sowie marktübliche innere Gleitmittel auf Polymethylmethacrylatbasis.
Die farbliche Gestaltung der Weich-PVC-Folie mit pigmentierenden Füllstoffen (zum Beispiel Titandioxid, Ruß, Eisenoxid, Bleichromat, Phthalocyaninpigmente) oder organischen Farbstoffen (zum Beispiel aus der Gruppe der Azo- oder Anthracenfarbstoffe) dient nicht nur ästhetischen Zwecken, sondern auch funktionalen, indem sie dem Verarbeiter eine gute optische Unterscheidbarkeit vom Haftgrund zu ermöglicht. So lassen sich Beklebungsfehlstellen optisch einfach detektieren.

Polyethtylenterephthalat (PET) gehört in die Gruppe der thermoplastischen Polyester und ist formal ein Polykondensat aus Terephthalsäure und 1,2-Ethandiol und kristallisiert aus der Schmelze rasch zu einem teilkristallinen Kunststoff. Handelsübliche Folien aus PET werden zunächst im Castverfahren extrudiert und anschließend biaxial verstreckt. Es ist eine große Bandbreite verschiedener Dicken kommerziell erhältlich.
Im erfindungsgemäßen Sinne werden unter PET-Folien auch Folien aus modifizierten Materialien wie PETG (glykolmodifiziertes PET) oder Copolyester, bei denen Terephthalsäure zum Teil durch Isophthalsäure als aromatische Dicarbonsäure ersetzt ist, verstanden. Darüber hinaus umfasst der Begriff "PET-Folien" auch metallisierte, coextrudierte und/oder geprimerte Varianten.

Zur Herstellung des zweischichtigen Aufbaus aus einer sPVC- und einer PET-Folie wird eine der beiden einander zugewandten Seiten mit dem erfindungsgemäßen Acrylsäureesterpolymerisat mit einem Flächengewicht von vorzugsweise 5 bis 60 g/m², besonders bevorzugt 10 bis 40 g/m² beschichtet und der andere Kaschierpartner unter Einwirkung von Druck, zum Beispiel mit einer Kaschiereinrichtung, luftblasenfrei verbunden.
Vor der Beschichtung beziehungsweise der Kaschierung der Fügepartner können die Folienoberflächen optional mit Coronaentladung, Flammbehandlung, Plasmabeschichtung oder einer nasschemischen Primerung zur Haftungssteigerung vorbehandelt werden.
Während des Kaschiervorganges kann der Verbund aus sPVC und PET durch ein Prägewerkzeug mit einer Struktur versehen werden.

Es entsprechen alle diejenigen Selbstklebemassen für die Fixierung des Selbstklebebandes auf dem Fensterflansch dem Erfindungsgedanken, die die hohen Anforderungen der Temperaturbeaufschlagungen während des Gebrauches des Klebebandes überstehen, ohne sich zu zersetzen, ihre Klebkraft zu verlieren oder nach der Anwendung Klebmasserückstände zu hinterlassen und die eine anwendungsgerechte Klebkraft auf KTL von mehr als 2 N/cm aufweisen.

Bevorzugt sind hier thermisch vernetzende oder strahlenvernetzte, harzabgemischte Naturkautschukselbstklebemassen, Acrylsäureesterpolymerisate (mit und ohne Zusatz von Klebharzen), Silicon- und Polyurethanselbstklebemassen sowie Synthesekautschukmassen, etwa auf Basis Butylkautschuk, Polyisobutylen oder Polyethylenvinylacetat zu nennen.
Alle Selbstklebemassen können, sofern so erhältlich, aus Lösung, aus der Schmelze oder als wässrige Dispersion auf den Träger mit geeigneten Beschichtungshilfsmitteln aufgetragen werden. Nach erfolgter Beschichtung kann das Klebeband zu Rollen aufgewickelt werden oder in Form von Blättern oder Stanzteilen konfektioniert werden.

Die Selbstklebemasse kann sowohl auf der sPVC- als auch der PET-Seite aufgetragen sein, bevorzugt jedoch auf der PET-Seite, da dann die schützende Wirkung der oben liegenden sPVC-Folie im Hinblick auf die Verletzungen der Klebebandkante beim Demaskieren besser zur Geltung kommt.

Je nach Art der Selbstklebemasse sind geeignete Primer zur Verbesserung der Verankerung vorteilhaft.

Zur Erleichterung des Handlings kann ein abrollkraftreduzierender Lack auf die nicht klebende Rückseite des Klebebandes aufgetragen sein, der ein Trennmittel wie Silicon, fluororganische Verbindungen oder Polyvinylstearylcarbamat enthält. Alternativ kann das Klebeband auf einem leicht trennenden Abdeckmaterial, zum Beispiel einem silikonbeschichteten Papier, dargereicht werden.

Sinnvolle Anwendungsbreiten sind 10 bis 30 mm, je nach Größe der einzuklebenden Scheibe. Für eine kurvenförmige Verklebung sollte die Breite des Klebebandes 15 mm nicht überschreiten, da dann ein faltenfreies Applizieren kaum noch möglich ist. Sie sollte 10 mm aber auch nicht unterschreiten, damit in jedem Fall eine genügend große Fläche zur sicheren Haftung von Scheibenkleber zu offen liegendem KTL vorhanden ist. Für die Roboterapplikation sind Einsatzbreiten von 12 bis 15 mm üblich.

Des Weiteren sind vom Erfindungsgedanken umfasst die Verwendung des erfindungsgemäßen Selbstklebeband zur Fensterflanschmaskierung, ein Fensterflansch, maskiert mit einem erfindungsgemäßen Selbstklebeband, sowie ein Automobil mit einem Fensterflansch, maskiert mit einem erfindungsgemäßen Selbstklebeband.

Das erfindungsgemäße Klebeband wird nachfolgend in bevorzugter Ausführung anhand von Beispielen beschrieben, ohne damit die Erfindung in irgendeiner Weise beschränken zu wollen. Des Weiteren sind Vergleichsbeispiele aufgeführt, in denen untaugliche Klebebänder dargestellt sind.

### Beispiele

Zur Veranschaulichung der Erfindung wurden insgesamt fünf Selbstklebebandmuster basierend auf den gleichen Folien präpariert, von denen zwei dem Erfindungsgedanken entsprechen, drei dagegen nicht.

### Verwendete Folien

Die sPVC-Folie bestand aus einer einheitlichen Rezeptur auf Basis eines mit Polyadipat weichgemachten PVCs in 100 µm Dicke, hergestellt auf einem Kalander. Die Festigkeit der Rezeptur bei einer Dehnung von 1 % in Maschinenrichtung betrug bei 23 °C ca. 18 N/mm².
Als PET-Folie kam eine handelsübliche biaxial verstreckte Polyethylenterephthalatfolie in 25 µm zum Einsatz.

### Alle Muster wurden nach folgendem Schema hergestellt:

Die PET-Folie wurde an einer Laborstreichanlage mit einer Lösung aus Polyvinylidendichlorid mit einem Auftragsgewicht von 0,8 g/m² zur Haftungsverbesserung geprimert. Auf den Primer wurde die Lösung des Kaschierklebers auf Basis eines Grundpolymerisates aus 50 Teilen Butylacrylat, 30 Teilen 2-Ethylhexylacrylat, 10 Teilen Vinylacetat, 5 Teilen Methylacrylat und 5 Teilen Acrylsäure gemäß Tabelle 1 vernetzt oder additiviert und mit Hilfe eines Streichbalkens so aufgebracht, dass nach dem Trocknen ein Selbstklebemassefilm von 25 g/m² resultierte. An einem Ausfallmuster wurde der Mikroscherweg bestimmt.

Zu der beschichteten PET-Folie wurde die PVC-Folie an einer Kaschierstation, bestehend aus einer Stahl- und einer Gummiwalze, laminiert.

Die Laminate wurden auf der Polyesterseite an einer Laborstreichmaschine mit einer Lösung aus 2 Teilen Naturkautschuk in Toluol, die mit 1 Teil Diphenylmethandiisocyanat gemischt worden war, mit einem Auftragsgewicht von 0,3 g/m² geprimert. In einem nachgeschalteten Arbeitsgang wurden die Muster auf diesen Primer mit einer Naturkautschukselbstklebemasse auf der Polyesterseite so beschichtet, dass ein Klebmasseflächengewicht von etwa 30 g/m² resultierte. Die Naturkautschukselbstklebemasse bestand aus 55 Teilen Naturkautschuk, 5 Teilen Zinkoxid, 6 Teilen Kolophoniumglycerinesterharz, 6 Teilen Alkylphenolharz, 26 Teilen Kohlenwasserstoffharz und 2 Teilen Mineralöl. Die Muster wurden zu Streifen von 15 mm Breite geschnitten und auf sich selber zu Rollen aufgewickelt.

**Tabelle 1: Vernetzung und/oder Additivierung der Basiskaschierselbstklebemasse bestehend aus einem Polymerisat aus 50 Teilen Butylacrylat, 30 Teilen 2-Ethylhexylacrylat, 10 Teilen Vinylacetat, 5 Teilen Methylacrylat und 5 Teilen Acrylsäure**

| | **Vernetzung** | **Additiv** |
|---|---|---|
| **Beispiel 1** | 0,5 % (w/w) Aluminium-acetylacetonat | --- |
| **Beispiel 2** | 1 % HDI (Hexamethylen-diisocyanat) | --- |
| **Gegenbeispiel 1** | --- | 30 % (w/w) Terpenphenol-harz |
| **Gegenbeispiel 2** | 0,3 % (w/w) Aluminium-acetylacetonat | --- |
| **Gegenbeispiel 3** | 0,5 % (w/w) Aluminium-acetylacetonat | 30 % (w/w) Terpenphenol-harz |

### Prüfkriterien

Als entscheidende Prüfkriterien für die vorliegende Problemstellung wurden folgende als wesentlich angesehen und herangezogen:
• Mikroscherweg
• Delaminationskraft

### Durchführung der Tests

### Mikroscherweg

Anhand der nachfolgend beschriebenen Figuren wird das Prüfkriterium des Mikroscherwegs im Detail erläutert.
Es zeigen
- Figur 1: die Präparation des zu vermessenden Musters,
- Figur 2: die erforderliche Messapparatur,
- Figur 3: die Durchführung der Messung in der Ansicht von vorne und
- Figur 4: die Durchführung der Messung in der Ansicht von der Seite.

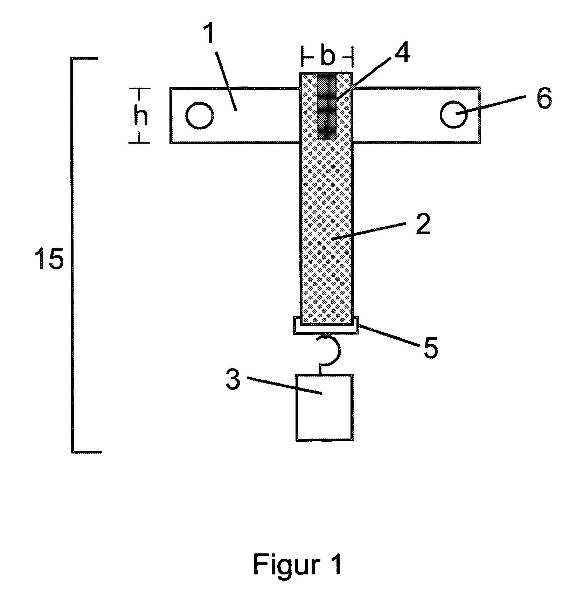

In der Figur 1 ist die Präparation des zu vermessenden Musters dargestellt. Ein Musterstreifen (2) der Breite b = 10 mm der mit dem Acrylsäureesterpolymerisat mit einem einheitlichen Flächengewicht von 25 g/m² beschichteten PET-Folie wird mit der Klebmasse quer auf eine Prüfplatte (1) aus Stahl der Breite h = 13 mm so aufgeklebt, dass oben wenige Millimeter und unten einige Zentimeter des Musterstreifens überstehen. Die Platte verfügt über Bohrungen (6), mit denen der fertig präparierte Prüfling (15) an der Messapparatur befestigt werden kann. Die Verklebung wurde dreimal mit einer 2 kg schweren Stahlrolle mit einer Geschwindigkeit von ca. 10 Meter pro Minute überrollt, um einen definierten Anpressdruck zu erzeugen. Auf die Rückseite des Prüfstreifens wurde ein selbstklebender Verstärkungsstreifen (4) aus 100 µm dicker Polyesterfolie geklebt und bündig mit dem wenige Millimeter langen Überstand abgeschnitten. Der Verstärkungsstreifen dient dem Messfühler der Messapparatur als solider Haltepunkt. Der mehrere Zentimeter lange Überstand wird zu einer Schlaufe gelegt und in diese eine Klammer (5) eingelegt, die später das Gewicht (3) aufnimmt.

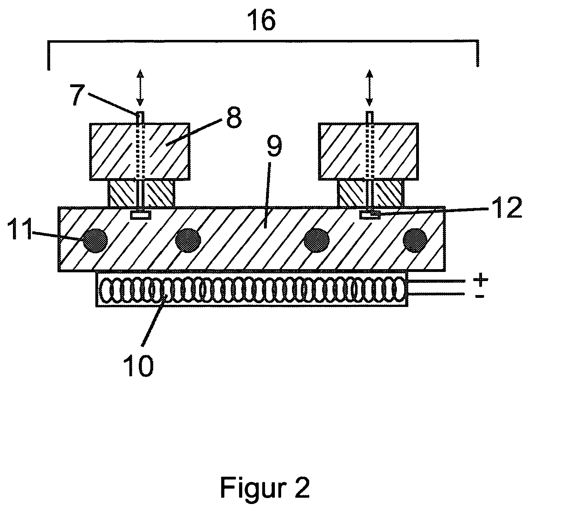

In der Figur 2 ist die Messapparatur gezeigt. Die Messapparatur (16) besteht aus einem elektrischen Heizelement (10), das den metallischen Probenträger (9) auf die gewünschte Temperatur oberhalb der Umgebungstemperatur heizt. Oberhalb des Pobenträgers (9) mit den Schrauben (11) zur Befestigung der zwei Prüflinge, die stets parallel vermessen werden, befinden sich die Messköpfe (8) mit den Mikrometermessfühlern (7) und deren Kontaktfläche (12). Die Mikrometermessfühler (7) haben ein vernachlässigbares Eigengewicht und sind nahezu reibungsfrei in vertikaler Richtung beweglich. Die vertikale Auslenkung von maximal 1000 µm wird von einer angeschlossenen Elektronik mit einer Auflösung von 1 µm registriert, aufgezeichnet und mit geeigneter Software numerisch oder graphisch dargestellt. Die Messfühler (7) folgen einer Abwärtsbewegung der Prüflinge unter dem Einfluss des angehängten Gewichts und detektieren so den Mikroscherweg.

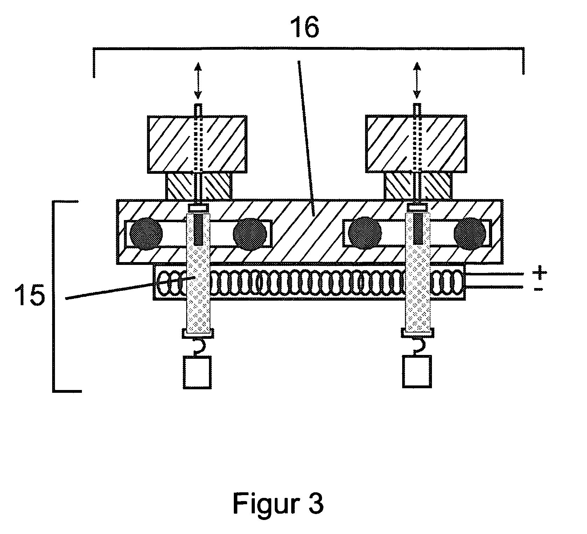

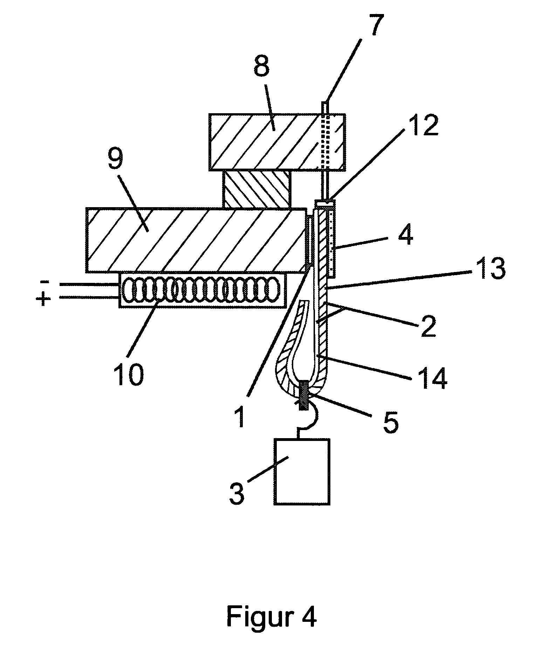

Die Figuren 3 und 4 zeigen die Durchführung der Messung in der Ansicht von vorne beziehungsweise in der Ansicht von der Seite. Der Prüfling (15) wird in die Messapparatur (16), die zuvor auf 40 °C temperiert worden ist, wie in den Figuren dargestellt, befestigt. Dabei wird die Kontaktfläche (12) der Messfühler (7) auf die Oberkante des Prüflings, der aus der Prüfplatte (1), der Selbstklebemasse (14), dem dimensionsstabilen Träger (13) und dem Verstärkungsstreifen (4) besteht, aufgesetzt und das Messsignal auf null gesetzt.
Wenn die Prüfplatte (1) nach wenigen Minuten die Temperatur des Probenträgers (9), der vom Heizelement (10) temperiert wird, angenommen hat, wird das Gewicht (3) mit der Gewichtskraft von 50 g in die Klammer (5) gehängt. Mit diesem Moment beginnt die Messung.
Nach 15 Minuten wird die Messung gestoppt und der Mittelwert aus den beiden Einzelergebnissen des Mikroscherweges gebildet und in der Dimension _{"}um" angegeben.
Das Ergebnis ist nur dann gültig, wenn kein Adhäsionsversagen auftritt.

### Delaminationskraft

Von den Musterrollen werden Streifen auf Stahlbleche geklebt und diese in einem Umluftofen zuerst über 50 Minuten bei 170 °C gebacken und 10 Minuten bei Raumtemperatur abgekühlt. Anschließend wird diese Prozedur über 50 Minuten bei 165 °C und noch mal über 80 Minuten bei 145 °C wiederholt. Von den Streifen wird jeweils beginnend von einem Ende die sPVC-Folie mit einem Messer vom PET getrennt und wenige Zentimeter abgezogen.

Zur Messung der Delaminationskraft werden die auf Raumtemperatur (23 °C) abgekühlten Stahlbleche in eine Zugprüfmaschine eingespannt und der Messkopf mit dem vorbereiteten freien Ende der sPVC-Folie verbunden.
Anschließend wird im 180°-Winkel mit einer Geschwindigkeit von 0,3 m/min das sPVC vom PET abgeschält und der Mittelwert der Delaminationskraft in der Dimension "N/cm" abgelesen.

Als zusätzliche Information kann man die Art des Bruches nutzen. Verbleibt der Kleber quantitativ auf einem der beiden Folien handelt es sich um Adhäsionsbruch, spaltet der Kleber handelt es sich um Kohäsionsbruch. Mitunter beobachtet man auch eine gemischte Form, den so genannten Mischbruch.

### Ergebnisse

Die Ergebnisse sind in Tabelle 2 zusammengefasst.

**Tabelle 2: Übersicht über die Prüfergebnisse der einzelnen Beispielmuster**

| | **Mikroscherweg in µm** | **Delaminationskraft in N/cm** | **Art des Bruches** |
|---|---|---|---|
| **Beispiel 1** | 25 | 8,8 | adhäsiv |
| **Beispiel 2** | 53 | 6,3 | adhäsiv |
| **Gegenbeispiel 1** | >1000* | 0,8 | kohäsiv |
| **Gegenbeispiel 2** | 176 | 2,4 | adhäsiv |
| **Gegenbeispiel 3** | 386 | 1,3 | kohäsiv |

| | | | |
|---|---|---|---|
| * Muster abgefallen, kohäsiver Bruch nach ca. 5 Minuten | | | |

Es zeigt sich, dass die für eine funktionierende Anwendung notwendigen Werte der Delaminationskraft nach thermischer Belastung nur von Mustern erreicht werden, die einen geringen Mikroscherweg aufweisen.

## Patentansprüche

1. Selbstklebeband insbesondere zum Abdecken von Fensterflanschen von Automobilen umfassend einen Träger aus zwei übereinander angeordneten Folien, wobei die erste Folie aus weichgemachtem Polyvinylchlorid (sPVC), die zweite aus Polyethylenterephthalat (PET) besteht und die beiden Folien mit einem Kaschierkleber verbunden sind aus einem vernetzten, klebharzfreien Acrylsäureesterpolymerisat, **gekennzeichnet durch** einen Mikroscherweg von weniger als 60 µm (bei einem Flächengewicht von 25 g/m²) und einer Delaminationskraft von mehr als 3 N/cm, sowie einer auf dem Träger aufgebrachten Selbstklebemasse.

2. Selbstklebeband nach Anspruch 1, **dadurch gekennzeichnet, dass** die Selbstklebemasse auf der PET-Folie des Trägers aufgetragen ist.

3. Selbstklebeband nach Anspruch 1 oder nach Anspruch 2, **dadurch gekennzeichnet, dass** auf der klebemassefreien Rückseite des Trägermaterials ein Trennlack vorhanden ist, der gleichzeitig eine gute Füller- und Lackhaftung gewährleistet.

4. Selbstklebeband nach zumindest einem der Ansprüche 1 bis 3, **dadurch gekennzeichnet, dass** die Gesamtdicke des zweischichtigen Trägers 90 bis 300 µm, bevorzugt 130 bis 250 µm beträgt.

5. Selbstklebeband nach mindestens einem der vorhergehenden Ansprüche, **dadurch gekennzeichnet, dass** der klebharzfreie Kaschierkleber aus Acrylsäureesterpolymerisat ein Copolymer ist aus verschiedenen Acrylsäureesterpolymeren aus Acrylsäureestern wie n-Butylacrylat, t-Butylacrylat, n-Butylmethacrylat, t-Butylmethacrylat, 2-Ethylhexylacrylat, Methylacrylat, Ethylacrylat, Methylmethacrylat, Hydroxyethylmethacrylat Hydroxyethylacrylat, Hydroxypropylacrylat, Stearylacrylat, Isobornylacrylat, Glycidylmethacrylat, oder aus Acrylsäure oder aus Nicht-Acrylatmonomeren wie Vinylacetat oder ein Gemisch verschiedener Homo- oder Copolymere aus Acrylsäureestermonomeren.

6. Selbstklebeband nach mindestens einem der vorhergehenden Ansprüche, **dadurch gekennzeichnet, dass** das Acrylsäureesterpolymerisat mindestens 20 Mol-% der Monomere n-Butylacrylat oder 2-Ethylhexylacrylat enthält.

7. Selbstklebeband nach mindestens einem der vorhergehenden Ansprüche, **dadurch gekennzeichnet, dass** der Kaschierkleber mit 5 bis 60 g/m², bevorzugt 10 bis 40 g/m² aufgetragen ist.

8. Selbstklebeband nach mindestens einem der vorhergehenden Ansprüche, **dadurch gekennzeichnet, dass** das vernetzte, klebharzfreie Acrylsäureesterpolymerisat einen Mikroscherweg von weniger als 60 µm (bei einem Flächengewicht von 25 g/m²) und eine Delaminationskraft von mehr als 5 N/cm aufweist.

9. Verwendung eines Selbstklebebandes nach zumindest einem der vorherigen Ansprüche zur Fensterflanschmaskierung.

10. Fensterflansch, maskiert mit einem Selbstklebeband nach zumindest einem der vorherigen Ansprüche.

11. Automobil mit Fensterflansch, maskiert mit einem Selbstklebeband nach zumindest einem der vorherigen Ansprüche.

## Claims

1. Self-adhesive tape intended in particular for masking window flanges of automobiles, comprising a backing composed of two films disposed one above the other, the first film being composed of plasticized polyvinyl chloride (soft or sPVC) and the second of polyethylene terephthalate (PET) and the two films being joined with a laminating adhesive comprising a crosslinked, tackifier-resin-free acrylic ester polymer, **characterized by** a microshear travel of less than 60 µm (for a coat weight of 25 g/m²) and a delamination force of more than 3 N/cm, and also comprising a self-adhesive mass applied to the backing.

2. Self-adhesive tape according to claim 1, **characterized in that** the self-adhesive mass has been applied to the PET film of the backing.

3. Self-adhesive tape according to claim 1 or claim 2, **characterized in that** the adhesive-free reverse face of the backing material carries a release lacquer which at the same time ensures effective surfacer and paint adhesion.

4. Self-adhesive tape according to at least one of claims 1 to 3, **characterized in that** the total thickness of the two-ply backing is 90 to 300 µm, preferably 130 to 250 µm.

5. Self-adhesive tape according to at least one of the preceding claims, **characterized in that** the tackifier-resin-free, acrylic ester polymer laminating adhesive is a copolymer of different acrylic ester polymers formed from acrylic esters such as n-butyl acrylate, t-butyl acrylate, n-butyl methacrylate, t-butyl methacrylate, 2-ethylhexyl acrylate, methyl acrylate, ethyl acrylate, methyl methacrylate, hydroxyethyl methacrylate, hydroxyethyl acrylate, hydroxypropyl acrylate, stearyl acrylate, isobornyl acrylate, glycidyl methacrylate, or else of acrylic acid or of non-acrylate monomers such as vinyl acetate, or a mixture of different homopolymers or copolymers of acrylic ester monomers.

6. Self-adhesive tape according to at least one of the preceding claims, **characterized in that** the acrylic ester polymer contains at least 20 mol% of the monomers n-butyl acrylate or 2-ethylhexyl acrylate.

7. Self-adhesive tape according to at least one of the preceding claims, **characterized in that** the laminating adhesive is applied at 5 to 60 g/m², preferably 10 to 40 g/m².

8. Self-adhesive tape according to at least one of the preceding claims, **characterized in that** the crosslinked, tackifier-resin-free acrylic ester polymer has a microshear travel of less than 60 µm (for a coat weight of 25 g/m²) and a delamination force of more than 5 N/cm.

9. Use of a self-adhesive tape according to at least one of the preceding claims for window flange masking.

10. Window flange masked with a self-adhesive tape according to at least one of the preceding claims.

11. Automobile with a window flange masked with a self-adhesive tape according to at least one of the preceding claims.

## Revendications

1. Ruban autoadhésif, en particulier pour le masquage de collerettes de fenêtre d'automobiles, comprenant un support constitué de deux feuilles superposées, où la première feuille est à base de poly(chlorure de vinyle) souple (sPVC), la deuxième à base de polyéthylène téréphtalate (PET), et où les deux feuilles sont solidarisées par un adhésif de placage constitué d'un polymère d'ester d'acide acrylique réticulé et exempt de résine adhésive, **caractérisé par** une course de microcisaillement de moins de 60 µm (pour un poids surfacique de 25 g/m²) et une force de délamination de plus de 3 N/cm, ainsi qu'une masse autoadhésive appliquée sur le support.

2. Ruban autoadhésif suivant la revendication 1, **caractérisé en ce que** la masse autoadhésive est appliquée sur la feuille de PET du support.

3. Ruban autoadhésif suivant la revendication 1 ou la revendication 2, **caractérisé en ce que**, sur le dos exempt de masse autoadhésive du matériau de support, se trouve un vernis de séparation qui garantit en même temps une bonne adhérence au bouche-pores et au vernis.

4. Ruban autoadhésif suivant au moins l'une quelconque des revendications 1 à 3, **caractérisé en ce que** l'épaisseur totale du support bicouche est de 90 à 300 µm, de préférence de 130 à 250 µm.

5. Ruban autoadhésif suivant au moins l'une quelconque des revendications qui précèdent, **caractérisé en ce que** l'adhésif de placage exempt de résine adhésive, et à base d'un polymère d'ester d'acide acrylique, est un copolymère de différents polymères d'esters d'acide acrylique à base d'esters d'acide acrylique tels que de l'acrylate de n-butyle, de l'acrylate de t-butyle, du méthacrylate de n-butyle, du méthacrylate de t-butyle, de l'acrylate de 2-éthylhexyle, de l'acrylate de méthyle, de l'acrylate d'éthyle, du méthacrylate de méthyle, du méthacrylate d'hydroxyéthyle, de l'acrylate d'hydroxyéthyle, de l'acrylate d'hydroxypropyle, de l'acrylate de stéaryle, de l'acrylate d'isobornyle, du méthacrylate de glycidyle, ou d'acide acrylique ou de monomères non acryliques tels que l'acétate de vinyle ou un mélange de différents homo- ou copolymères de monomères esters d'aide acrylique.

6. Ruban autoadhésif suivant au moins l'une quelconque des revendications qui précèdent, **caractérisé en ce que** le polymère d'ester d'acide acrylique contient au moins 20% molaires des monomères d'acrylate de n-butyle ou d'acrylate de 2-éthylhexyle.

7. Ruban autoadhésif suivant au moins l'une quelconque des revendications qui précèdent, **caractérisé en ce que** l'adhésif de placage est appliqué à raison de 5 à 60 g/m², de préférence de 10 à 40 g/m².

8. Ruban autoadhésif suivant au moins l'une quelconque des revendications qui précèdent, **caractérisé en ce que** le polymère d'ester d'acide acrylique réticulé, exempt de résine adhésive, présente une course de microcisaillement de moins de 60 µm (pour un poids surfacique de 25 g/m²) et une force de délamination de plus de 5 N/cm.

9. Utilisation d'un ruban autoadhésif suivant au moins l'une quelconque des revendications qui précèdent pour le masquage de collerettes de fenêtre.

10. Collerette de fenêtre masquée avec un ruban autoadhésif suivant au moins l'une quelconque des revendications qui précèdent.

11. Automobile comportant une collerette de fenêtre masquée avec un ruban autoadhésif suivant au moins l'une quelconque des revendications qui précèdent.
